# EUROPEAN PATENT APPLICATION

(11) **EP 1 881 217 A2**
(43) Date of publication of application: **23.01.2008**
(21) Application number: 07112344.2
(22) Date of filing: 12.07.2007
(51) Int. Cl.: F16C 33/78

(54) **Sealing device for bearings**

(30) Priority: 18.07.2006 JP 2006195369
(71) Applicant: JTEKT CORPORATION, Chuo-ku Osaka-shi Osaka 542-8502 (JP)
(72) Inventor: Kubo, Tomomasa JTEKT CORPORATION, Osaka-shi, Osaka 542-8502 (JP)
(74) Representative: TBK-Patent

(57) **Abstract**

A seating device (1) can include a bearing (11) having a first ring (13) and a second ring (12), a metal ring (2) connected to the first ring (13), and an elastic body (4) connected to the metal ring (2). The elastic body (4) includes a projection part (4e) having a lip part extending from the metal ring toward the first ring (13) so as to be elastically in contact with the first ring (13) and grooves (4f1,4f2) positioned adjacent the lip parts.

## Description

This application claims priority to Japanese patent application serial number 2006-195369, the contents of which are incorporated herein by reference.

The invention relates to a sealing device for a bearing comprising a metal ring and an elastic body. The metal ring is mounted on an inner ring or an outer ring of the bearing. The elastic body is mounted to the metal ring and seals a space between the inner ring and the outer ring.

Various kinds of sealing device for a bearing such as a sealing device described in JP-A-2001-65704 have been known up to now. The sealing device disclosed in JP-A-2001-65704 includes an inner metal ring mounted to an outer circumferential surface of an inner ring, an outer metal ring mounted to an inner circumferential surface of an outer ring and an elastic body mounted to the outer metal ring and being in contact with the inner metal ring so as to be slidable. The elastic body has an annular projection part projecting toward the outer ring from the outer circumferential surface of the outer metal ring. The elastic body is pressed into the outer metal ring together with the outer metal ring with the projection part being elastically deformed. This allows the projection part to contribute to improvement in sealing performance between the elastic body and the outer ring.

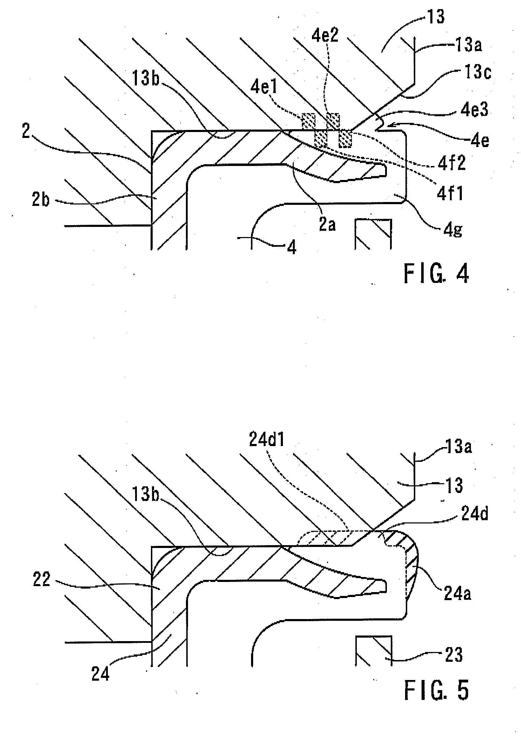

The conventional projection part 24d shown in Fig. 5, however, has a problem. That is to say, the projection part 24d is in the shape of a simple convex. Accordingly, the projection part 24d is elastically deformed when it is pressed into the outer ring 13. A projection portion 24d1, when deformed, creates deformed part 24a due to the elastic deformation. The deformed part 24a projects from an end surface 13a of the outer ring 13, and thus deformed part 24a interferes with components adjacent to the bearing. Also, the deformed part 24a causes difficulty in measuring the quantity of depth of the sealing device into the bearing. This is problematic because the quantity of press of the sealing device into the bearing cannot be fixed.

Thus, there is need in the art for a sealing device having a projection that, when deformed, does not result in a deformed shape that interferes with adjacent components or hinder the measurement of quantity of depth.

One aspect of the present invention can include a sealing device including a bearing having a first ring and a second ring, a metal ring connected to the first ring, an elastic body connected to the metal ring. The elastic body includes a projection part having a lip part extending from the metal ring toward the first ring so as to be elastically in contact with the first ring and a groove positioned adjacent the lip parts. The groove is provided along the entire circumferential of the projection part.

Therefore, the projection part of the elastic body is elastically deformed when it is pressed into the first ring together with the metal ring. The deformed part, generated by the elastic deformation, then moves towards or into the groove. Thus the groove prevents the elastic body from being deformed or projected from an end surface of the elastic body.

In another aspect of the present invention, the elastic body is mounted to the metal ring mounted on an inner circumferential surface of the outer ring. The projection part of the elastic body has an outer diameter larger than the inner circumference or inner diameter of the outer ring. The bottom circumference of the groove is smaller than the inner circumference of the outer ring.

Accordingly, the outer ring presses the projection part so that the projection part elastically deforms when the projection part is pressed into the outer ring together with the metal ring. The deformed projection part thus can move towards the groove. Thus the groove prevents the elastic body from being deformed from the end surface of the elastic body.

In another aspect of the present invention, the projection part includes a plurality of lip parts adjacent the groove. And, at least one of the plurality of lip parts is in contact with a surface of a chamfered part formed on an end surface of the one of the both rings.

Accordingly, the contact of the lip part with the chamfered part of the ring can improve sealing performance between the lip part and the chamfered part.

Additional objects, features, and advantages, of the present invention will be readily understood after reading the following detailed description together with the claims and the accompanying drawings, in which:
FIG. 1 is a cross-sectional view of a sealing device for a bearing of a wheel;
FIG. 2 is an enlarged cross-sectional view of a part of the sealing device;
FIG. 3 is an enlarged cross-sectional view of a part of the sealing device before the sealing device is pressed into the bearing;
FIG. 4 is an enlarged cross-sectional view of the part of the sealing device after the sealing device is pressed into the bearing; and
FIG. 5 is an enlarged cross-sectional view of a part of a conventional sealing device after the sealing device is pressed into a bearing.

Each of the additional features and teachings disclosed above and below may be utilized separately or in conjunction with other features and teachings to provide improved sealing devices for bearings. Representative examples of the present invention, which examples utilize many of these additional features and teachings both separately and in conjunction with one another, will now be described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the following detailed description may not be necessary to practice the invention in the broadest sense, and are instead taught merely to particularly describe representative examples of the invention. Moreover, various features of the representative examples and the dependent claims may be combined in ways that are not specifically enumerated in order to provide additional useful configurations of the present teachings.

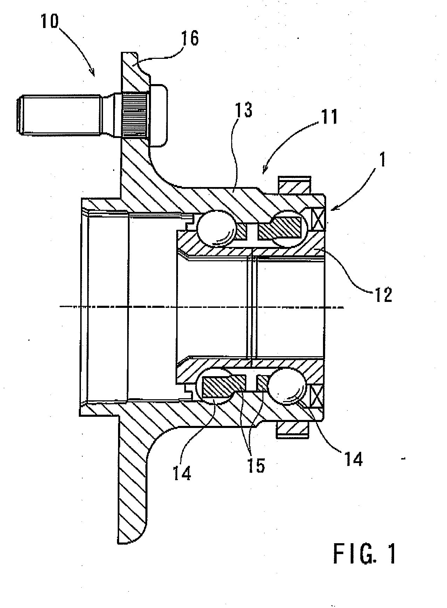

The sealing device 1 of the present invention can be used in a rolling bearing 11 for a bearing device for a wheel (a hub unit) 10, as shown in Fig. 1.

The rolling bearing 11 can include an inner ring 12 and an outer ring 13 as shown in Fig. 1. The outer ring 13 has a hub 16 on the outer circumferential surface, which can be formed integrally. A wheel (not shown) can be mounted to the hub 16. Rolling elements 14 are rotatably provided between the inner ring 12 and the outer ring 13 in two rows. The roling elements 14 in the respective rows can be held by way of cages 15 at predetermined intervals.

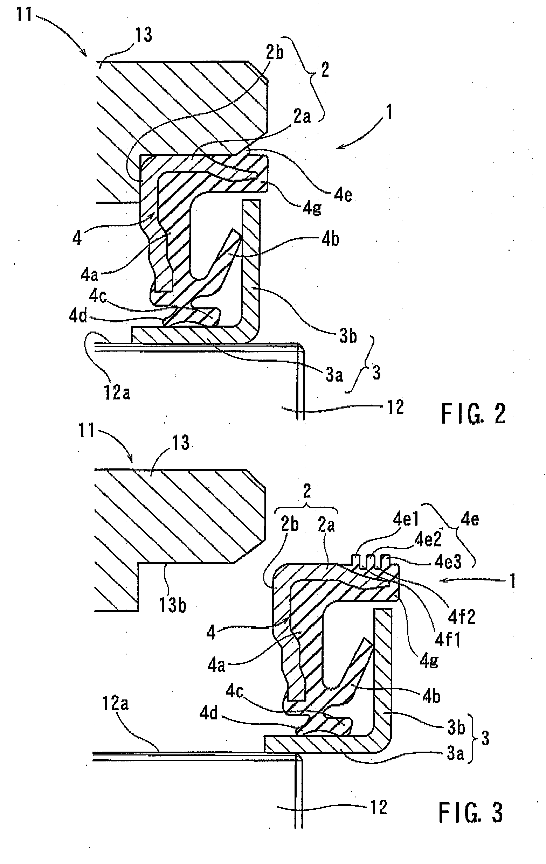

The sealing device 1 has an outer metal ring 2, an inner metal ring 3 and an elastic body 4 that can function as a seal between the inner ring 12 and the outer ring 13, as shown in Fig. 2. The metal rings 2 and 3 can be made of metal such as stainless steel. The metal rings 2 and 3 can include cylinder parts 2a and 3a and vertical parts 2b and 3b. The vertical parts 2b and 3b extend from the cylinder parts 2a and 3a toward the other cylinder parts 2a and 3a. The cylinder parts 2a and 3a can be integrally formed with the vertical parts 2b and 3b.

In this embodiment, the outer metal ring (a first metal ring) 2 can be structured to have a circumference (or diameter) larger than the inner metal ring (a second metal ring) 3 and can be positioned on the outer circumferential side of the inner metal ring 3, as shown in Figs. 2 and 3. The outer metal ring 2 is pressed into the inner circumferential side of the outer ring 13 so that the cylinder part 2a is connectable on an inner circumferential surface of the outer ring 13. On the other hand, the inner metal ring 3 can be pressed into the outer circumferential side of the inner ring 12 so that the cylinder part 3a is connectable on the outer circumferential surface of the inner ring 12. The vertical parts 2b and 3b face each other via the elastic body 4.

The elastic body 4 can be made of rubber or synthetic resin. The elastic body 4 can be formed into one body with the outer metal ring 2, as shown in Figs. 2 and 3. The elastic body 4 has a main body part 4a, a side lip 4b and two radial lips 4c and 4d. The main body 4a can have a substantially L-shaped cross-section and positioned over the cylinder part 2a of the metal ring 2 and the vertical part 2b. The side lip 4b and the radial lips 4c and 4d extend from the main body part 4a toward the vertical part 3b and the cylinder part 3a of the inner metal ring 3, respectively.

The side lip 4b obliquely extends outward in the diameter direction from the top end (the lower end) of the inner circumference of the main body part 4a, and thus is able to contact vertical part 3b, as shown in Figs. 2 and 3. The radial lips 4c and 4d diverge in the axial direction from the radial inner top end of the main body part 4a, and thus are able to contact the outer circumferential surface of the cylinder part 3a. Accordingly, the side lip 4b and the radial lips 4c and 4d slide on the inner metal ring 3 as the inner ring 12 and the outer ring 13 relatively rotate.

The elastic body 4 further includes a cover part 4g and a projection part 4e, as shown in Figs. 2 and 3. The cover part 4g extends from the main body part 4a so as to cover the end part of the cylinder part 2a. The cover part 4g extends along inner circumferential surface, tip end and outer circumferential surface of the cylinder part 2a.

The projection part 4e is structured to extend outward, in the diameter direction, from the cover part 4g and outward beyond the most outer circumferential surface of the cylinder part 2a of the metal ring 2, as shown in Fig. 3. The projection part 4e is provided along the length of the outer circumference of the cylinder part 2a and formed into a ring shape. The projection part 4e is provided with plural grooves 4f1 and 4f2.

The grooves 4f1 and 4f2 are formed in the diameter direction from the outer circumferential surface side of the projection part 4e and extends along substantially the entire circumferential length of the projection part 4e, as shown in Fig. 3. Accordingly, the projection part 4e can be divided into plural annular lip parts 4e1, to 4e3 by the grooves 4f1 and 4f2. The lip parts 4e1 to 4e3 can be formed parallel in the axial direction.

The lip parts 4e1 to 4e3 represents an outer circumference of elastic part 4. The outer circumference of lips 4e1 and 4e3 is structured to be larger than that of the inner circumferential surface 13b of the outer ring 13, as shown in Fig. 3. Accordingly, the lip parts 4e1 and 4e2 are elastically deformed when they are pressed into the inner circumferential side of the outer ring 13, as shown in Fig. 4. On the other hand, the bottom diameters or circumference of the bottoms of the grooves 4f1 and 4f2 is structured to be smaller than that of the inner circumferential surface 13b of the outer ring 13. Therefore, a deformed part, generated by the elastic deformation of the lip parts 4e1 and 4e2, moves so as to fill the grooves 4f1 and 4f2 in, so that the grooves 4f1 and 4f2 offset the deformed part.

In this embodiment, one (4e3) of the lip parts 4e1 to 4e3 is structured to contact a surface of chamfered part 13c of the outer ring 13, as shown in Fig. 4. The chamfered part 13c is formed between the end surface 13a and the inner circumferential surface 13b of the outer ring 13. The lip part 4e3 is the last (the most right in Fig. 3) lip part in the press direction. The side surface (the left surface in Fig. 3) of the lip part 4e3 in the press direction is elastically in contact with the chamfered part 13c. Accordingly, the lip part 4e3 improves a sealing performance between the elastic body 4 and the outer ring 13.

The sealing device 1 is formed as described above. That is to say, the sealing device 1 comprises the outer metal ring 2, the inner metal ring 3 and the elastic body 4, which has a ring shaped projection part 4e projecting from the outer metal ring 2 toward the outer ring 13 so as to be elastically in contact with the outer ring 13. The grooves 4f1 and 4f2 are positioned to extend substantially along the entire circumferential length of the projection part 4e.

Accordingly, the projection part 4e of the elastic body 4 is elastically deformed when it is pressed into the outer ring 13 together with the outer metal ring 2, as shown in Fig. 4. The deformed part is able to move in a direction so that the grooves 4f1 and 4f2 of the projection part 4e are filled in. Thus the grooves 4f1 and 4f2 prevent the elastic body 4 from being deformed from the end surface the elastic body (in a direction from the end surface 13a of the outer ring 13; refer to Fig. 4). Thus, the present invention reduces the likelihood interference with adjacent components or the hindrance of the measurement of quantity of depth.

Further, the projection part 4e of the elastic body 4 has the outer circumference or outer diameter that is larger than the inner circumference or inner diameter of the outer ring 13, as shown in Fig. 3. The circumference of the bottom of the grooves 4f1 and 4f2 (or bottom diameter) provided in the projection part 4e is smaller than the inner circumference or inner diameter of the outer ring 13.

Accordingly, the outer ring 13 contacts the projection part 4e so that the projection part 4e is elastically deformed when the projection part 4e is pressed into the outer ring 13 together with the outer metal ring 2. The deformed part, generated by the elastic deformation, thus can move so that that the grooves 4f1 and 4f2 are filled in be the deformed lip parts, since the grooves 4f1 and 4f2 are depressed below than the inner surface of the outer ring 13. Thus the grooves 4f1 and 4f2 prevent the elastic body 4 from being deformed outwardly from the end of cover part 4g.

Moreover, the projection part 4e of the elastic body 4 can include a plurality of lip parts 4e1 to 4e3 by the grooves 4f1 and 4f2, as shown in Fig. 3. One (4e3) of the plural lip parts 4e1 to 4e3 can be structured to be in contact with a surface of the chamfered part 13c formed on the end surface 13a of the outer ring 13, as shown in Fig. 4.

Accordingly, contact between the lip part 4e3 and the chamfered part 13c of the outer ring 13 can improve the sealing performance.

While the invention has been described with reference to specific configurations, it will be apparent to those skilled in the art that many alternatives, modifications and variations may be made. Accordingly, the present invention is intended to embring all such alternatives, modifications and variations that may fall within the spirit and scope of the appended claims. For example, the present invention should not be limited to the representative configurations, but may be modified as described below.

(1) For example it may be possible that 13 shown in Figs. 2 to 4 denotes not an outer ring but an inner ring, 12 denotes not an inner ring but an outer ring, 2 denotes a first metal ring connectable to the inner ring, 3 denotes a second metal ring connectable to the outer ring, the elastic body 4 can include a ring shaped projection part 4e projected toward the inner ring and pressed into the outer circumferential surface of the inner ring and the grooves 4f1 and 4f2 can be positioned along substantially the entire circumferential length of the projection part 4e.

(2) The grooves are provided in the projection part in two rows in the above-mentioned embodiment. The grooves, however, may be provided only in one row or in three or more rows.

(3) In the above-mentioned embodiment, the metal ring 3 is provided to be in contact slidably with the elastic body 4, as shown in Fig. 2. It may be possible, however, to provide no metal ring to be in slidable contact with the elastic body. The elastic body may directly contact with the inner ring or the outer ring so as to be slidable. That is to say, it may be possible that the sealing device includes a metal ring connected to one of the inner and outer rings, an elastic body mounted to the metal ring and to be slidably contacted with the other of the both rings, and the elastic body includes a projection part projected from the metal ring to the one of the inner or outer rings, the projection part is able to contact with the one of the inner or outer rings by pressure, and a groove is provided along the entire circumferential length of the projection part.
A sealing device (1) can include a bearing (11) having a first ring (13) and a second ring (12), a metal ring (2) connected to the first ring (13), and an elastic body (4) connected to the metal ring (2). The elastic body (4) includes a projection part (4e) having a lip part extending from the metal ring toward the first ring (13) so as to be elastically in contact with the first ring (13) and grooves (4f1,4f2) positioned adjacent the lip parts.

## Claims

1. A sealing device (1) for a bearing (11) comprising:
an inner ring (12) and an outer ring (13) of the bearing, the inner ring (12) and the outer ring (13) capable of relatively rotating;
a metal ring (2) connected to one of the inner and outer ring (12,13); and
an elastic body (4) connected to the metal ring (2),
wherein the elastic body (4) includes a projection part (4e) extending from the metal ring (2) toward the one of the inner and outer race (12,13) so as to be elastically in contact with the one of the inner and outer race (12,13), and a groove (4f1,4f1).

2. The sealing device (1) as in claim 1, wherein
a second metal ring (3) connected to the other of the inner and outer ring (12,13), further
wherein the elastic body (4) is capable of slidably contacting with the second metal ring (3).

3. The sealing device (1) as in claim 1,
wherein the metal ring (2) is mounted on an inner circumferential surface (13b) of the outer ring (13),
the projection part (4e) of the elastic body (4) has an outer circumferential diameter larger than the inner circumferential diameter of the outer ring (13), and
the groove provided in the projection part (4e) has a bottom diameter smaller than the inner circumferential diameter of the outer ring (13).

4. The sealing device (1) as in claim 1, wherein the projection part (4e) of the elastic body (4) includes a plurality of lip parts (4e1,4e2,4e3) positioned by the grooves (4f1,4f2), and one of the plurality lip parts (4e1,4e2,4e3) is capable of contacting a surface of a chamfered part (13c) on an end surface of the one of the inner and outer ring (12,13).

5. The sealing device (1) as in claim 1, wherein the elastic body (4) slidably contacts with the other of the inner and outer ring (12,13).

6. The sealing device (1) as in claim 1, wherein the groove (4f1,4f2) is positioned along substantially the entire circumferential length of the projection part (4e).
